Europäisches Patentamt

(19) European Patent Office

Office européen des brevets

(11) Veröffentlichungsnummer: **0 229 590**
B1

(12) **EUROPÄISCHE PATENTSCHRIFT**

(45) Veröffentlichungstag der Patentschrift:
20.12.89

(51) Int. Cl.⁴: **H02B 1/04, H02B 1/20**

(21) Anmeldenummer: 86810538.8

(22) Anmeldetag: 25.11.86

(54) **Niederspannungsverteilung.**

(30) Priorität: 14.12.85 CH 5309/85

(43) Veröffentlichungstag der Anmeldung:
22.07.87 Patentblatt 87/30

(45) Bekanntmachung des Hinweises auf die Patenterteilung:
20.12.89 Patentblatt 89/51

(84) Benannte Vertragsstaaten:
AT BE CH DE ES FR GB IT LI NL SE

(56) Entgegenhaltungen:
DE-A- 1 946 714
DE-A- 2 030 449

(73) Patentinhaber: CMC Carl Maier + Cie AG,
Fulachstrasse 150, CH-8201 Schaffhausen(CH)

(72) Erfinder: Kick, Hermann, Bruderhöflistrasse 5,
CH-8203 Schaffhausen(CH)
Erfinder: Ehrensperger, Fritz, alte
Rudolfingerstrasse 704, CH-8460 Marthalen(CH)

(74) Vertreter: Breiter, Heinz et al, Patentanwalt H. Breiter
AG Wartstrasse 4 Postfach 1163,
CH-8401 Winterthur(CH)

## Beschreibung

Die vorliegende Erfindung betrifft eine Niederspannungsverteilung mit wenigstens an einer Stromschiene lösbar angeschlossenen Installationseinbaugeräten (im folgenden IEG genannt), einem Sammelschienensystem und Mitteln zur Einspeisung der Sammelschienen.

Niederspannungsschaltgeräte, zu welchen insbesondere die IEG gehören, werden vor allem bei Nennströmen bis zu 63 A in grossen Mengen in Verteilungen eingesetzt. Die IEG umfassen beispielsweise Sicherungen, Leitungsschutzschalter, Fehlerstromschutzschalter, Motorschutzschalter, Hauptschalter, weitere Reiheneinbaugeräte und Schütze. Die IEG, welche einzeln oder zu mehreren Geräten zusammengefasst montiert werden, übernehmen das Schalten und/oder den Schutz der abgehenden Leitungen und damit der daran angeschlossenen Verbraucher.

Es ist dabei üblich, von einem vorgeschalteten Ueberstromschutzorgan mit z.B. 100 oder 200 A Nennstrom eine grössere Anzahl von IEG mit elektrischer Energie zu versorgen.

Bei bekannten Niederspannungsverteilungen werden nach einer ersten bekannten Variante die IEG auf einer Hutschiene montiert und mittels eines elektrischen Leiters je ein Pol eines IEG mit einer zu dieser parallel verlaufenden Sammelschiene verbunden. Nach einer zweiten bekannten, insbesondere in den USA üblichen Variante sind die IEG an Stelle einer Eingangsklemme mit einem Steckkontakt ausgerüstet. Damit ist es möglich, die Einspeisung über entsprechend ausgebildete und vorgefertigte Sammelschienen durch Aufstecken der IEG auf die Sammelschiene zu bewerkstelligen, wobei jedoch die IEG und die Sammelschienen zusammenpassend ausgebildet sein müssen.

Die von amerikanischen Herstellern geschaffenen Anschlusssysteme sind auf die entsprechenden Bedürfnisse konzipiert. Eine Kombination einzelner IEG mit solchen eines andern Herstellers ist nicht möglich. In Europa dagegen sind Abmessungen und Befestigungen der IEG schon sehr früh normiert worden. Für die Befestigung der IEG mit einem Schnappmechanismus dienen normierte Hutschienen von 35 mm Breite. Der schweizerische elektrotechnische Verein beispielsweise hat die europäische Norm für 35 mm breite Hutschienen zur Schnappbefestigung von IEG in der Norm SEV-EN 50 022 (1978) festgelegt. Die Hüllmasse der IEG, d.h. die Aussenmasse von deren Gehäuse, sind in DIN 43 880 festgelegt.

Ausgehend von dieser Sachlage ist es in Europa üblich, die auf den Hutschienen befestigten IEG über eine Eingangsklemme an den Sammelschienen anzuschliessen. Zu diesem Zweck sind von den meisten Herstellern vorkonfektionierte Sammelschienen erhältlich; sie sind als Kamm ausgebildet und in einem Kunststoffprofil verankert. Dabei ist bei dreiphasigen Sammelschienen eine feste Phasenfolge vorgegeben. Falls Sammelschienen mit grösserem Querschnitt erforderlich sind, bieten die Hersteller üblicherweise Sammelschienenbügel an. Diese dienen zum Anschluss der einzelnen IEG an Sammelschienen unterschiedlichen Querschnitts. Mit Hilfe der Sammelschienenbügel lassen sich individuell gestaltete Einspeisungen der IEG vornehmen. Allen bekannten Lösungen haftet jedoch der Nachteil einer zeitraubenden und aufwendigen Montage an. Beim Aufbau einer Niederspannungsverteilung muss eine grosse Anzahl von Anschlussschrauben festgezogen werden. Weiter muss der Gewährleistung eines hinreichenden Abstandes zwischen Anschlüssen unterschiedlichen Potentials grosse Aufmerksamkeit geschenkt werden.

Eine weitere Einschränkung durch die beschriebene Aufbauart besteht darin, dass es nicht auf einfache Weise möglich ist, einzelne IEG aus dem Verband auszubauen. Die zum Wegschnappen der IEG von der Hutschiene erforderliche Drehbewegung wird durch den in die Eingangsklemme hereinragenden Sammelschienenanschluss verunmöglicht. Das Auswechseln von IEG muss nicht nur bei verhältnismässig selten auftretenden Defekten erfolgen, sondern insbesondere auch, wenn beispielsweise in einer Maschinenhalle während der Bauphase bis zur Inbetriebnahme einzelne Verbraucher umgestellt werden und deshalb Nennstromanpassungen in der Niederspannungsverteilung notwendig sind.

Nach einer in der DE-OS 27 55 062 beschriebenen Ausführungsform einer Niederspannungsverteilung ist die Eingangsklemme der IEG als flexible Verbindung mit Schraubenanschluss passend auf entsprechend vorkonfektionierte Sammelschienen ausgebildet. Die Einspeisung kann dreiphasig erfolgen, wobei jedoch die Phasenfolge fest vorgegeben ist. In den beschriebenen Ausführungsformen ist der Neutralleiter nicht in das Sammelschienensystem miteinbezogen.

In der DE-OS 28 43 858 wird ein Sammelschienensystem zum Anschliessen von IEG beschrieben, das die Behebung einiger der oben beschriebenen Mängel erlaubt. Es muss jedoch eine grosse Zahl von Einzelteilen eingesetzt werden, welche für den Aufbau beschafft und montiert werden müssen.

Die Erfinder haben sich die Aufgabe gestellt, eine Niederspannungsverteilung der eingangs beschriebenen Art zu schaffen, die einfach in der Montage, kostensparend in der Beschaffung von zusätzlich notwendigen Einzelteilen und flexibel in der Verwendung ist sowie eine Lagerbewirtschaftung auf niedriger Investitionsstufe erlaubt.

Die Aufgabe wird erfindungsgemäss dadurch gelöst, dass
- die IEG im Bereich ihrer Gehäuserückseite pro Pol mit einem selbstfedernden Steckkontaktteil ausgerüstet sind, welches in einem in Längsrichtung des IEG verlaufenden Führungskanal schwimmend positionierbar ist, und von einer Sammelschiene - unter Bildung einer kontaktschlüssigen Verbindung - den elektrischen Strom abnimmt und in das IEG leitet bzw. bei einer Einspeisung über das IEG den elektrischen Strom der Sammelschiene zuführt,
- ein nach wenigstens einer Seite offener, aus elektrisch isolierendem Material bestehender Stecksockel, welcher die Sammelschienen haltert, auf einer Unterlage befestigbar ist und im wesentlichen aus in Längs- und Querrichtung verlaufenden Rippen besteht, wobei die in Abständen entsprechend der Normmasse der IEG verlaufenden Querrippen die Sammelschienen in ausgesparten Nuten aufnehmen, und

- die Mittel zur Einspeisung der Sammelschienen an frei wählbarer Stelle angeschlossen sind.

Mit der erfindungsgemässen Lösung muss pro IEG-Typ (z.B. Leitungsschutzschalter, Fehlerstromschutzschalter) nur eine Bauform hergestellt werden. Die Lage des Steckkontaktteils kann durch entsprechende Positionierung an die Lage der Sammelschienen angepasst werden. Weil das Steckkontaktteil schwimmend positionierbar ist, kann es durch Temperaturschwankungen hervorgerufene Dilatationen bzw. Kontraktionen auffangen.

Die auf der Gehäuserückseite des IEG angeordnete Führung für das Steckkontaktteil umfasst alle dem Mechaniker bekannten Lösungen mit Arretiermöglichkeit. Zweckmässig wird ein auf einer Seite offener Führungskanal mit vertikalen Seitenwänden ausgespart. Im gleichen Abstand, parallel zur Auflagefläche auf dem Stecksockel, verlaufen in den Seitenwänden des Führungskanals auf derselben Seite des IEG offene Führungsnuten, in welche das/die Führungsplättchen eines Steckkontaktteils, welches seitlich eingeführt wird, eingreift/eingreifen. Weiter ist/sind im Führungskanal bzw. in den Führungsnuten an sich bekannte Vorrichtung/en angeordnet, die der schwimmenden Arretierung des Steckkontaktteils dienen. Die schwimmende Positionierung kann beispielsweise dadurch erzeugt werden, dass das in die Nuten eingeführte Plättchen des Steckkontaktteils von geringerer Dicke ist als die Breite der Nut.

In der Praxis ist das Steckkontaktteil zweckdienlich als sog. Stecktulpe ausgebildet, wobei die Form der beiden bevorzugt selbstfedernden Schenkel der geometrischen Form des Sammelschienenquerschnitts angepasst ist. Dieser kann jede zweckdienliche Form annehmen, vorzugsweise ist er jedoch rechteckig, quadratisch oder rund ausgebildet. Wie die Sammelschienen selbst bestehen die Stecktulpen aus elektrisch gut leitendem Material, beispielsweise aus Kupfer, Messing oder Aluminium.

Der Stecksockel mit den eingefügten Sammelschienen besteht vorzugsweise aus einem gut spritzbaren Kunststoff, insbesondere einem Polyamid, Polyäthylen oder Polypropylen. Dieser Stecksockel hat bevorzugt einen modulartigen Aufbau, in dem Längs- und Querrippen in regelmässigen Abständen angeordnet sind. Zwischen den Querrippen können die Steckkontaktteile auf die Sammelschienen geklemmt werden.

Obwohl die IEG dank des kraftschlüssigen Eingriffs fixiert sind, ist es vorteilhaft, sowohl an diesen als auch am Stecksockel Einschnappvorrichtungen bekannter Bauart anzuordnen. So kann die eine Längsseite des Stecksockels mit Widerlagern ausgerüstet sein, welche zu Beginn des Aufstekkens des IEG in eine entsprechend ausgeformte Nut, welche im Bereich der IEG-Gehäuserückseite aus der vom Führungskanal abgewandten Schmalseite ausgespart ist, eingeführt werden. Ebenfalls auf der Gehäuserückseite, anschliessend an den offenen Führungskanal, können bei den IEG zwei vorspringende Nasen angeordnet sein. Die zweite Längsseite des Stecksockels ist in diesem Fall mit angeformten oder daran befestigten Schnapphaken versehen, welche mit den vorspringenden Nasen verrasten. Der Abstand der Schnapphaken entspricht beispielsweise dem Raster der Querrippen. Zweckmässig haben die Schnapphaken einen um eine Achse schwenkbaren, abgewinkelten Hebel, mit welchem die eingerasteten Nasen der Schnapphaken abgehoben werden können.

Auf der den allfällig angebrachten Schnapphaken gegenüberliegenden äusseren Längsseite des Stecksockels können offene, vertikale T- oder Schwalbenschwanzführungen angeformt sein, in welche von oben wenigstens ein Zusatzsockel eingeführt werden kann, welche/r der Aufnahme von weiteren Sammelschienen dient/en. Der Stecksockel kann also nach freiem Ermessen erweitert werden. So können beispielsweise ein Neutralleiter, ein PE-Leiter (Protective Earth) und/oder ein PEN-Leiter (Protective Earth + Neutral) auf einem Zusatzsockel angeordnet werden.

Eine wahlweise aufgebrachte, sich über die ganze Länge des Stecksockels erstreckende, nach vorne orientierte Leiste ist zur Aufnahme von Beschriftungen bestimmt. In diesem Fall werden gleichzeitig das IEG auf der Gehäusevorderseite und die erwähnte Leiste beschriftet. Dadurch ist gewährleistet, dass beim Entfernen eines IEG die betreffende Stelle markiert ist, und das Gerät problemlos an derselben Stelle wieder eingesetzt werden kann.

Der Stecksockel mit seinen Zusatzbestandteilen und den Sammelschienen ist also ein Elementebausatz, der nach Bedarf zusammengefügt wird.

Die Stromzufuhr zu den Sammelschienen kann auf verschiedenste Weise erfolgen:

- Es werden separate Einspeiseklemmen verwendet, die an einem Ende der Sammelschienen, jedoch auch an geeigneter Stelle im Innern des Stecksockels, angeordnet sind.
- Ein Einspeiseblock, der vorzugsweise aus dem gleichen Material wie der Stecksockel besteht und nach dem gleichen Prinzip aufgebaut ist, wird verwendet. Dieser Einspeiseblock kann ggf. wie die IEG aufgeschnappt werden, er kann also ohne Werkzeuge an beliebiger Stelle im Stecksockel montiert und wieder entfernt werden. Der Einspeiseblock enthält eine der Anzahl Schienen entsprechende Anzahl von Einspeiseklemmen, wobei deren Pratzen in kontaktschlüssigem Eingriff mit den Sammelschienen stehen.
- Ein oder mehrere normal ausgebildete IEG können Strom über je einen Pol mittels eines Steckkontaktteils in eine Sammelschiene/Sammelschienen einspeisen, ohne dass die Grundfunktion des/der IEG beeinträchtigt wird.

In allen Ausführungsformen der Einspeisung ist eine besondere Einspeiseklemme gut geeignet. Diese besteht aus einem U-förmig ausgebildeten Gehäuse mit von einer Schraube durchgriffener Basisfläche. Aus beiden Schenkeln des U-förmigen Gehäuses ist bevorzugt je eine grosse Oeffnung ausgestanzt. Damit kann der Anschlussleiter aus vier Richtungen in die Einspeiseklemme eingeführt und mit der Schraube, die stirnseitig auf ein Auflageplättchen einwirkt, festgeklemmt werden. Die Schenkel des U-förmigen Gehäuses setzen sich als Klemmpratzen fort. Beim Uebergang der Gehäuseschenkel in die Klemmpratzen ist eine Achse angeordnet, auf welcher ein abgewinkelter Hebel schwenkbar ist. Diesen Hebel bildet einerseits die entgegengesetzte Klemmpratze und andererseits das Auflageplättchen, auf welchem der Anschlussleiter aufliegt. Wird nun die Schraube angezogen, so wird dank der Wirkung des abgewinkelten Hebels nicht nur der Anschlussleiter festgeklemmt, sondern auch die beidseits der Sammelschiene angelegten Klemmpratzen zusammengedrückt. Somit kann mit dem Anziehen einer Schraube sowohl der Anschlussleiter fixiert als auch die Einspeiseklemme auf einer Sammelschiene kontaktschlüssig befestigt werden. Zur Positionierung der Einspeiseklemme auf einer Sammelschiene kann eine Federkraft auf die Klemmpratzen einwirken.

Mit der erfindungsgemässen Lösung werden folgende Vorteile erzielt:
- Die IEG können ohne Werkzeuge, nur durch Aufstecken, montiert werden. Sie rasten ein und können auch ohne Werkzeuge wieder entfernt werden.
- Die IEG sind bei einem Umrüsten der Verbraucher leicht auswechelbar.
- Die Sammelschienensysteme, d.h. die Stecksockel mit den Sammelschienen, sind nach dem Baukastenprinzip zusammenschnappbar. Ebenfalls nach dem Baukastenprinzip können Zusatzsockel angefügt werden.
- Pro IEG-Typ muss nur eine Variante - und nicht mehrere mit Steckkontaktteilen in verschiedenen Positionen - hergestellt und an Lager gehalten werden.

Durch das Aufbringen der IEG werden die stromführenden Sammelschienen automatisch nach vorne abgedeckt und einer Berührungsgefahr entzogen.

Die IEG gemäss vorliegender Erfindung können auch für konventionelle Niederspannungsverteilungen verwendet werden, indem die für Hutschienen notwendige Aussparung angebracht ist. In die üblicherweise für ein Steckkontaktteil vorgesehenen Nuten wird eine Klemm- oder Feststellbride eingesetzt, welche in die Hutschiene einschnappen kann. Allerdings muss ein solches IEG noch eine Eingangsklemme haben. Bei polyvalenter Verwendung des IEG ist dieses mit einer Eingangsklemme ausgerüstet, die entweder über einen flexiblen Leiter mit dem Steckkontaktteil verbunden oder an welchem - bei fehlendem Steckkontaktteil - der Verbindungsleiter zur Sammelschiene bzw. der Anschlussdraht festgeklemmt ist.

Bei dieser Ausführungsform, mit Eingangsklemme und Positionierungseinrichtungen für ein Steckkontaktteil bzw. eine Klemm- oder Feststellbride, ist es möglich, IEG ohne die erwähnten Teile zu montieren oder an Lager zu legen. Je nach Kundenwunsch kann, unmittelbar vor der Auslieferung oder sogar erst durch den Anwender selbst, das Steckkontaktteil oder die Klemm- bzw. Feststellbride eingesetzt werden.

Die Erfindung wird anhand der nachfolgenden Ausführungsbeispiele näher erläutert. Es zeigen schematisch:

- Fig. 1 eine teilweise aufgeschnittene Ansicht eines IEG mit eingebauter Stecktulpe,
- Fig. 2 einen vertikalen Querschnitt A - A (Fig. 1) durch den Führungskanal eines IEG,
- Fig. 3 eine perspektivische Ansicht eines Arretierschiebers,
- Fig. 4 eine perspektivische Ansicht einer Stecktulpe,
- Fig. 5 einen Vertikalschnitt B - B (Fig. 7) durch einen Stecksockel,
- Fig. 6 einen Vertikalschnitt durch einen Zusatzsockel,
- Fig. 7 eine Draufsicht auf einen Stecksockel,
- Fig. 8 eine perspektivische Darstellung eines Einspeiseblocks mit vier Haupt- und zwei Hilfseinspeiseklemmen,
- Fig. 9 eine perspektivische Ansicht einer Einspeiseklemme, und
- Fig. 10 eine teilweise aufgeschnittene Ansicht eines auf Hutschienen montierbaren IEG.

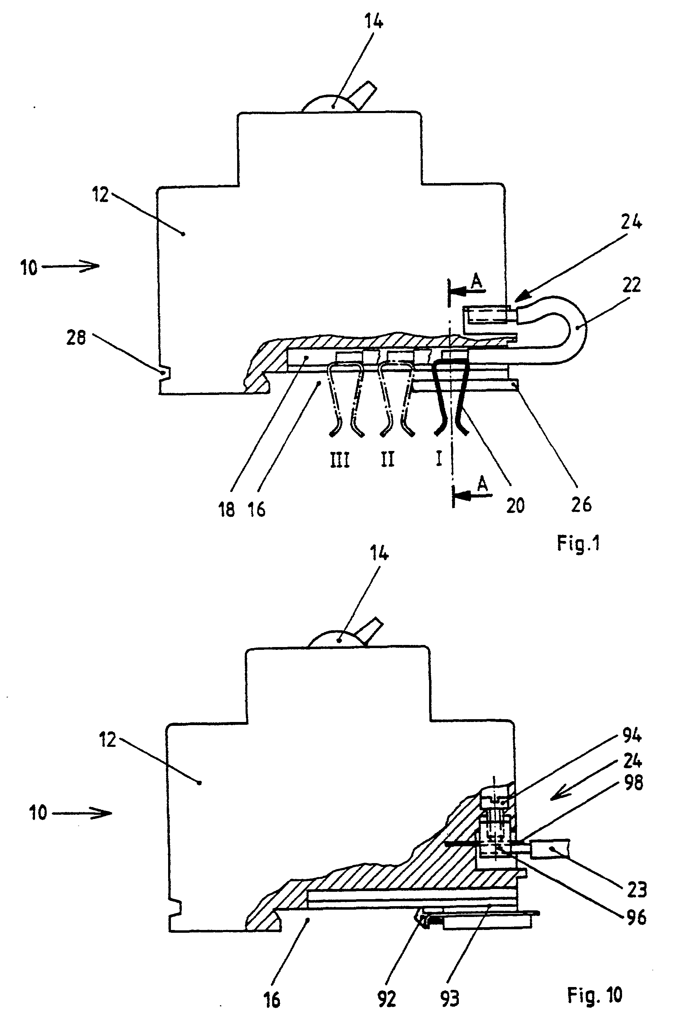

Das in Fig. 1 dargestellte IEG 10 ist von einem Gehäuse 12 mit normierten Aussenmassen umgeben. An der Vorderseite des IEG ist ein Schalthebel 14 sichtbar. Auf der Rückseite des Gehäuses ist eine auf der linken Seite schwalbenschwanzförmige Aussparung 16 zum Aufschnappen auf eine nicht dargestellte Hutschiene sichtbar. Die Aussparung 16 hat jedoch beim IEG 10 gemäss Fig. 1 keine Funktion und wäre im Prinzip nicht notwendig.

In Pos. I ist - in einem Führungskanal 18 schwimmend positioniert - eine Stecktulpe 20 angeordnet. Ueber einen flexiblen Leiter 22 ist die Stecktulpe mit einer wie bei konventionellen Ausführungsformen gestalteten, den Strom einspeisenden Eingangsklemme 24 verbunden. Von dort wird der Strom in das Innere des IEG geleitet. Nach einer nicht dargestellten Variante kann das Gehäuse 12 am Ort der gezeichneten Eingangsklemme 24 geschlossen sein. Der elektrische Strom wird in diesem Fall von der Stecktulpe 20 direkt in das Innere des IEG geführt.

Mit II und III sind weitere mögliche Positionen der Stecktulpe 20 angedeutet, je nach der Lage der einspeisenden Sammelschiene.

Zur stabileren Fixierung des aufgesteckten IEG ist, auf der einen Seite abkragend, eine Nase 26, auf der andern Seite eine Nut 28 angeordnet.

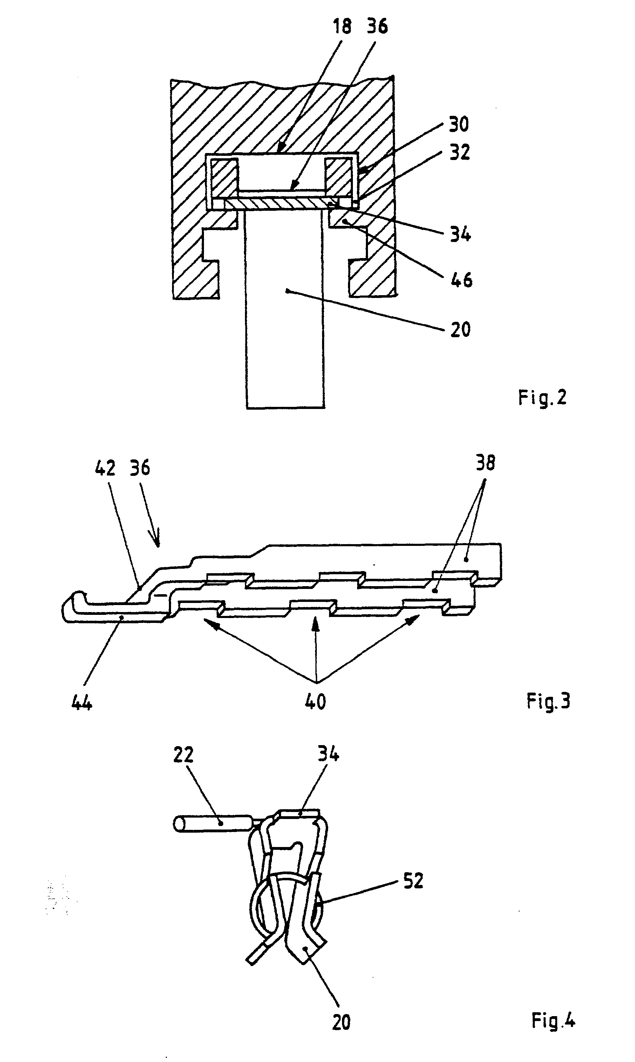

Der Führungskanal 18 für die Stecktulpe 20 ist in Fig. 2 im Detail dargestellt. In den Seitenwänden 30 des Führungskanals sind zwei parallel verlaufende Führungsnuten 32 ersichtlich, in welchen das im vorliegenden Fall mit der Stecktulpe 20 einstückig ausgebildete Führungsplättchen 34 mit dem Arretierschieber 36 eingeführt wird. Dieser Arretierschieber ist in Fig. 3 detailliert dargestellt, er besteht aus einem elastischen Kunststoff, beispielsweise Polyäthylen, und hat im vorliegenden Fall auf seinen beiden Schenkeln 38 je drei Einkerbungen 40, welche in Breite und Tiefe etwa den Dimensionen des Führungsplättchens 34 der Stecktulpe 20 entsprechen. Am Verbindungsstück 42 der beiden Schenkel 38 ist ein Arretierhaken 44 angeformt.

Die beiden verhältnismässig dünnen Führungsflansche 46 (Fig. 2) sind ebenfalls an je drei Stellen, entsprechend den Dimensionen der Einkerbungen 40 des Arretierschiebers 36 ausgespart. Ist der Arretierschieber derart positioniert, dass die Einkerbungen 40 unter den Aussparungen in den Führungsflanschen 46 liegen, können Führungsplättchen 34 der Stecktulpe 20 von vorne in die Einkerbungen 40 des Arretierschiebers eingeführt werden. Wird der Arretierschieber in Längsrichtung des Führungskanals 18 verschoben, so werden die Führungsplättchen 34 und damit die Stecktulpe 20 selbst durch den Arretierschieber 36 und die Führungsflansche 46 fixiert. Das das Plättchen 34 jedoch etwas Spiel hat, ist die Stecktulpe 20 schwimmend arretiert. Der Arretierhaken 44 des Arretierschiebers 36 kann durch Einstecken in ein entsprechend ausgespartes Loch arretiert werden.

Die in Fig. 4 dargestellte Stecktulpe 20 ist die in der Praxis üblicherweise angewandte Form des selbstfedernden Steckkontaktteils. Die Funktion des mit der Feder einstückig ausgebildeten Führungsplättchens 34 ist in der Beschreibung von Fig. 2 und 3 diskutiert worden. Am Führungsplättchen 34 elektrisch leitend verbunden ist ein in das Innere des IEG führender flexibler Leiter 22. Die Klemmkraft der Stecktulpe 20 wird bedeutend erhöht, wenn ein Spannring 52 darüber angeordnet ist. Bei einer nicht selbstfedernden Stecktulpe 20 muss ein Spannring 52 angeordnet werden.

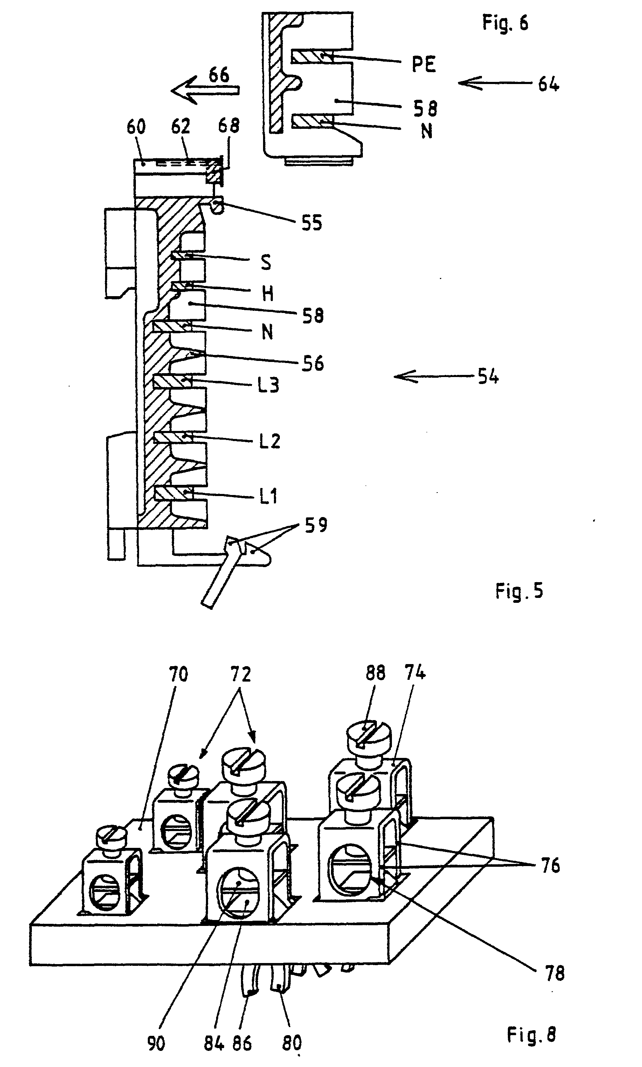

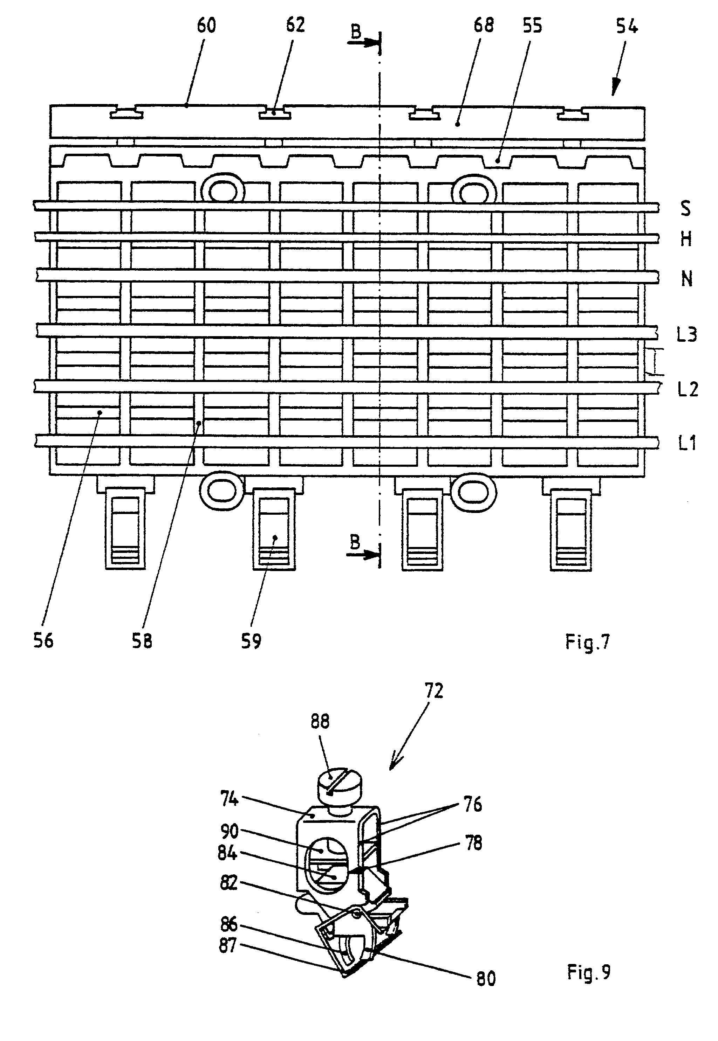

Der in den Fig. 5 und 7 dargestellte Stecksockel 54 besteht im wesentlichen aus Längs- 56 und Querrippen 58. Die Sammelschienen, welche in entsprechend geformte Aussparungen der Querrippen 58 eingeschoben sind, umfassen die drei Pha sen $L_1$, $L_2$ und $L_3$, den Neutralleiter N, den Hilfskontaktleiter H und den Signalkontaktleiter S. In der gemäss Fig. 5 oberen Längsseitenwand 60 sind vorne offene, horizontale T-förmige Nuten 62 zur Aufnahme eine Zusatzsockels 64 ausgespart, was in Fig. 6 mit einem Pfeil 66 angedeutet ist. Der Zusatzsockel 64 enthält - ebenfalls in Ausformungen der Querstege 58 gehaltert - die Sammelschienen für die Erde PE und den Neutralleiter N.

Die modulartig aufgebauten Stecksockel 54 bzw. Zusatzsockel 64 sind in Längsrichtung der Leiter zweckmässig sechs- oder achtteilig.

Es können nicht nur von einem Stecksockel 54 Zusatzsockel 64 aufgenommen, sondern mehrere Stecksockel 54 können in Längsrichtung der Leiter in bekannter Weise aneinander gefügt werden. Das Aneinanderfügen einzelner Stecksockel erfolgt beispielsweise durch gegenseitig verbundene, an den Stirnseiten angebrachte bzw. angeformte Haken.

Die an den Steckstockel 54 angeformten Schnapphaken 59 sind federnd ausgebildet und können mit den Nasen 26 der IEG 10 verrasten. Die an die andere Längsseite des Stecksockels 54 angeformten Widerlager 55 greifen in die Nut 28 der IEG ein.

In den Fig. 5 und 7 ist eine Leiste 68 zum Beschriften dargestellt, wobei die Beschriftung derjenigen auf dem entsprechenden IEG entspricht.

Der in Fig. 8 als einfache Platte dargestellte Einspeiseblock 70 ist für einen Stecksockel mit vier Sammelschienen und zwei Hilfsschienen konzipiert, auf welchen er aufgesetzt werden kann, ggf. mit Hilfe von Mitteln zum Einschnappen. Die lediglich in bezug auf die Grösse unterschiedlichen Einspeiseklemmen 72 sind in Fig. 9 näher dargestellt. Das U-förmig ausgebildete Gehäuse 74 ist - in Fig. 8 gut ersichtlich - auf zwei Seiten vollständig offen. In den beiden Schenkeln 76 sind Oeffnungen 78 ausgespart. So kann die Leiterzuführung aus vier Richtungen erfolgen. Die Schenkel 76 des U-förmigen Gehäuses setzen sich auf einer Seite in Form von Klemmpratzen 80 fort. Im oberen Bereich der Klemmpratzen 80 ist eine Achse 82 angeordnet, um welche ein aus einem Auflageplättchen 84 und einer Klemmpratze 86 gebildeter, abgewinkelter Hebel schwenkbar ist. Wird ein Anschlussleiter mittels Umdrehens der Schraube 88 bzw. mittels des daran befestigten Plättchens 90 festgeklemmt, so drückt der Anschlussleiter auf das Auflageplättchen 84. Durch die Hebelwirkung drückt die Klemmpratze 86 gleichzeitig gegen die Sammelschiene. Eine Feder 87 übt beim Aufsetzen der Einspeiseklemme 72 eine zur Positionierung auf der Sammelschiene hinreichende Kraft aus.

Das in Fig. 10 dargestellte IEG 10 enthält keine positionierbare Stecktulpe. In Nuten 93 geführt ist eine gefederte Klemm- bzw. Feststellbride 92 angeordnet, welche unter der Bezeichnung RAFIX-Bride bekannt ist und das Aufschnappen des Geräts auf einer üblichen Hutschiene erlaubt. Der elektrische Strom wird über einen Leiter bekannter Ausführungsform der Eingangsklemme 24 zugeführt bzw. von ihr abgeführt. Diese besteht aus Schraube 94, Käfig 96 und Anschlussstück 98. Diese Ausführungsform zeigt, dass eine Variante des erfindungsgemässen IEG, mit einer Eingangsklemme 24, ohne erheblichen Aufwand in konventionellen Systemem mit Hutschienen einbaubar ist.

Die in Fig. 1 nicht im Detail dargestellte Eingangsklemme 24 kann wie in dieser Figur gezeigt ausgebildet sein, und der elektrische Strom kann mindestens teilweise über einen Leiter 23 zugeführt bzw. abgeführt werden.

**Patentansprüche**

1. Niederspannungsverteilung mit wenigstens an einer Sammelschiene lösbar angeschlossenen Installationseinbaugeräten (IEG), einem Sammelschienensystem und Mitteln zur Einspeisung der Sammelschienen (L1, L2, L3, N, H, S), dadurch gekennzeichnet, das

- die IEG (10) im Bereich ihrer Gehäuserückseite pro Pol mit einem Steckkontaktteil (20) ausgerüstet sind, welches in einem in Längsrichtung des IEG (10) verlaufenden Führungskanal (18) schwimmend positionierbar ist, und von einer Sammelschiene - unter Bildung einer kontaktschlüssigen Verbindung - den elektrischen Strom abnimmt und in das IEG (10) leitet bzw. bei einer Einspeisung über das IEG den elektrischen Strom der Sammelschiene zuführt,

- ein nach wenigstens einer Seite offener, aus elektrisch isolierendem Material bestehender Stecksockel (54), welcher die Sammelschienen ($L_1,L_2,L_3,N,H,S$) haltert, auf einer Unterlage befestigbar ist und im wesentlichen aus in Längs- und Querrichtung verlaufenden Rippen (56,58) besteht, wobei die in Abständen entsprechend der Normmasse der IEG (10) verlaufenden Querrippen (58) die Sammelschienen in ausgesparten Nuten aufnehmen, und
- die Mittel zur Einspeisung der Sammelschienen an frei wählbarer Stelle angeschlossen sind.

2. Niederspannungsverteilung nach Anspruch 1, dadurch gekennzeichnet, dass die Führung für das Steckkontaktteil (20) auf der Gehäuserückseite des IEG (10) durch zwei in den vertikalen Seitenwänden des Führungskanals (18) in gleichem Abstand parallel zur Auflagefläche auf dem Stecksockel (54) verlaufende, auf einer Seite offene Führungsnuten (32) gebildet ist, in welche ein Führungsplättchen (34) des Steckkontaktteils (20) eingreift.

3. Niederspannungsverteilung nach Anspruch 2, dadurch gekennzeichnet, dass der auf einer Seite offene Führungskanal (18) einen Schieber (36) zur schwimmenden Arretierung des Steckkontaktteils (20) enthält.

4. Niederspannungsverteilung nach einem der Ansprüche 1-3, dadurch gekennzeichnet, dass das Steckkontaktteil (20) eine vorzugsweise selbstfedernde Stecktulpe ist.

5. Niederspannungsverteilung nach einem der Ansprüche 1-4, dadurch gekennzeichnet, dass das IEG (10) und der Stecksockel (54) mit Widerlagern und Einschnappvorrichtungen zur Befestigung des ersteren ausgerüstet sind.

6. Niederspannungsverteilung nach Anspruch 5, dadurch gekennzeichnet, dass die IEG (10) im Bereich ihrer Gehäuserückseite, anschliessend an den offenen Führungskanal (18), zwei vorspringende Nasen (26), auf der andern Seite eine Nut (28) aufweisen, während an der einen Längsseite des Stecksockels Schnapphaken (59) und an der andern Längsseite Widerlager (55) befestigt bzw. angeformt sind.

7. Niederspannungsverteilung nach einem der Ansprüche 1-6, dadurch gekennzeichnet, dass auf einer Längsseite des Stecksockels (54) offene, vertikale Schwalbenschwanznuten bzw. T-förmige Nuten (62) zur Aufnahme eines Zusatzsockels (64) und/oder eine, sich über die ganze Sockellänge erstreckende Beschriftungsleiste (68) angeordnet ist/sind.

8. Niederspannungsverteilung nach einem der Ansprüche 1-7, dadurch gekennzeichnet, dass die Stromzufuhr zu den Sammelschienen über separat angeordnete Einspeiseklemmen (72), einen Einspeiseblock (70) mit je einer Einzelspeiseklemme (72) pro Sammelschiene oder über je einen Pol eines IEG (10) mittels eines Steckkontaktteils (20) erfolgt.

9. Niederspannungsverteilung nach Anspruch 8, dadurch gekennzeichnet, dass die Einspeiseklemme (72) aus einem U-förmig ausgebildeten Gehäuse (74) mit von einer Schraube (88) durchgriffener Stirnfläche, einer Oeffnung (78) für einen Anschlussleiter versehenen Schenkelflächen (76) und als Verlängerung ausgebildete Klemmpratzen (80) sowie einem um eine Achse (82) schwenkbaren abgewinkelten Hebel mit einem Auflageplättchen (84) und einer Klemmpratze (86) besteht, wobei beim Festdrehen der Schraube (88) der Anschlussleiter auf das Auflageplättchen (84) einwirkt und die Klemmpratzen (80,86) die Stromschiene festklemmen.

10. Niederspannungsverteilung nach einem der Ansprüche 1-9, dadurch gekennzeichnet, dass die IEG (10) mit einer Eingangsklemme (24) ausgerüstet sind, welche mit einem zum Steckkontaktteil (20) führenden flexiblen Leiter (22) in kontaktschlüssigem Eingriff steht und an welche - vorzugsweise mittels eines Anschlussstücks (98), eines Käfigs (96) und einer Schraube (94) - ein weiterer, den elektrischen Strom mindestens· teilweise zuführender bzw. abführender Leiter (23) anschliessbar ist.

## Claims

1. Low voltage distribution unit with builtin equipment releasably connected at least on one busbar, a busbar system and means for feeding the busbars (L1, L2, L3, N, H, S), characterized in that
   – the builtin equipment (10) is provided in the region of its housing rear, per pole, with a plug in contact part (20), which can be positioned in a floating manner in a guide duct (18) running in longitudinal direction of the builtin equipment (10), and draws the electric current from a busbar – forming a contact engaging connection – and conducts it into the builtin equipment (10) or, in the case of a feed via the builtin equipment, feeds the electric current to the busbar,
   – a socket (54); which is open at least on one side, consists of electrically insulating material, secures the busbars (L1, L2, L3, N, H, S), can be fastened on a base and essentially consists of ribs (56, 58) running in the longitudinal direction and transverse direction, the transverse ribs (58), running with spacings corresponding to the standard dimensions of the builtin equipment (10), receiving the busbars in recessed grooves, and
   – the means for feeding the busbars are connected at a freely selectable place.

2. Low voltage distribution unit according to Claim 1, characterized in that the guide for the plug in contact part (20) on the housing rear of the builtin equipment (10) is formed by two guide grooves (32); which run in the vertical side walls of the guide duct (18) at the same spacing parallel to the bearing surface on the socket (54); are open on one side and into which a guide lug (34) of the plug in contact part (20) engages.

3. Low voltage distribution unit according to Claim 2, characterized in that the guide duct (18) open on one side contains a slide (36) for the floating locking of the plug in contact part (20).

4. Low voltage distribution unit according to one of Claims 1-3, characterized in that the plug in contact part (20) is a preferably self springing plug in tulip.

5. Low voltage distribution unit according to one of Claims 1-4, characterized in that the builtin equipment (10) and the socket (54) are provided with abutments and snap in device for the fastening of the said builtin equipment.

6. Low voltage distribution unit according to Claim 5, characterized in that the builtin equipment (10) has in the region of its housing rear, adjoining the open guide duct (18), two projecting noses (26), on the other side a groove (28), while snap hooks (59) are fastened or moulded on the one longitudinal side of the socket and abutments (55) are fastened or moulded on the other longitudinal side.

7. Low voltage distribution unit according to one of Claims 1–6, characterized in that open, vertical dovetail grooves or T shaped grooves (62) for receiving an additional socket (64) and/or an inscription strip (68), extending over the entire socket length, is/are arranged on one longitudinal side of the socket (54).

8. Low voltage distribution unit according to one of Claims 1–7, characterized in that the power supply to the busbars takes place via separately arranged feed terminals (72), a feed block (70) with an individual feed terminal (72) per busbar or via one pole each of an item of bultin equipment (10) by means of a plug in contact part (20).

9. Low voltage distribution unit according to Claim 8, characterized in that the feed terminal (72) consists of a U shaped designed housing (74) with an endface penetrated by a screw (8), leg surfaces (76) provided ... (lacuna) an opening (78) for a supply conductor and clamping claws (80) designed as an extension, as well as an angled off lever, which can be pivoted about an axis (82), with a bearing lug (84) and a clamping claw (86), the supply conductor acting on the bearing lug (84) and the clamping claws (80, 86) clamping the busbar upon tightening of the screw (88).

10. Low voltage distribution unit according to one of Claims 1–9, characterized in that the builtin equipment (10) is provided with an input terminal (24), which is in contact making engagement with a flexible conductor (22) leading to the plug in contact part (20) and to which a further conductor (23), at least partially feeding or leading away the electric current, can be connected – preferably by means of a terminal fitting (98), a cage (96) and a screw (94).

**Revendications**

1. Distribution basse tension comprenant des appareils de montage d'installation raccordés d'une manière démontable au moins à un rail conducteur, ainsi qu'un système de barres collectrices et des organes pour l'alimentation de celles-ci, (L1, L2, L3, N, H, S), caractérisée en ce que les appareils de montage sont équipés, dans la zone de leur face arrière de boîtier, par pôle, d'une pièce de contact à enficher (20) qui peut être mise en place à l'état flottant dans un conduit de guidage (18) se développant dans le sens longitudinal des appareils de montage (10) et qui, en partant d'une barre collectrice – tout en formant, une connexion par contact abaisse le courant électrique et le conduit dans l'appareil de montage (10) ou amène le courant électrique de la barre collectrice par l'intermédiaire de l'appareil de montage lors d'une alimentation; en ce qu'une douille à enficher (54) ouverte au moins d'un côté, se composant d'une matière électriquement isolante et maintenant les barres collectrices (L1, L2, L3, N, H, S), est fixable sur un support et se compose en substance de nervures (56, 58) se développant dans le sens longitudinal et transversal, les nervures transversales (58) distantes les unes des autres conformément à la dimension normalisée des appareils de montage (10) recevant les barres collectrices dans des rainures évidées; et en ce que les organes pour l'alimentation des barres collectrices sont raccordés à des endroits librement sélectionnables.

2. Distribution basse tension selon la revendication 1, caractérisée en ce que le guidage pour la pièce de contact à enficher (20) est formé sur la face arrière du boîtier de l'appareil de montage (10) par deux rainures de guidage (32) ouvertes d'un côté et se développant parallèlement à la surface d'appui sur la douille à enficher (54), à une distance égale, dans les parois latérales verticales du conduit de guidage (18), rainures de guidage (32) dans lesquelles s'engage une plaquette de guidage (34) de la pièce de contact à enficher (20).

3. Distribution basse tension selon la revendication 2, caractérisée en ce que le conduit de guidage (18) ouvert d'un côté contient un verrou (36) pour l'arrêt flottant de la pièce de contact à enficher (20).

4. Distribution basse tension selon l'une quelconque des revendications 1 à 3, caractérisée en ce que la pièce de contact à enficher (20) est une pièce en U à enficher de préférence auto-élastique.

5. Distribution basse tension selon l'une quelconque des revendications 1 à 4, caractérisée en ce que l'appareil de montage et la douille à enficher (54) sont pourvus de butées et de dispositifs d'encliquetage pour la fixation de l'appareil de montage.

6. Distribution basse tension selon la revendication 5, caractérisée en ce que les appareils de montage (10) comprennent, dans la zone de leur face arrière de boîtier, après le conduit de guidage ouvert (18), deux talons saillants (26) et, sur leur autre face, un rainure (28), tandis que des butées (55) sont fixées ou formées sur l'une des faces longitudinales de la douille à enficher et des crochets d'encliquetage (59) sur l'autre face longitudinale.

7. Distribution basse tension selon l'une quelconque des revendications 1 à 6, caractérisée en ce qu'on a disposé, sur une face longitudinale de la douille à enficher (54), des rainures en forme de T ou des rainures en queue d'aronde, ouvertes et verticales pour la réception d'une douille supplémentaire (64) et/ou une plaquette signalétique (68) s'étendant sur la longueur entière de la douille.

8. Distribution basse tension selon l'une quelconque des revendications 1 à 7, caractérisée en ce que l'apport de courant aux barres collectrices se fait par l'intermédiaire de bornes d'alimentation disposées séparément, d'un bloc d'alimentation (70) comportant une borne d'alimentation individuelle (72) par barre collectrice ou par l'intermédiaire d'un pôle d'un appareil de montage (10) au moyen d'une pièce de contact à enficher (20).

9. Distribution basse tension selon la revendication 8, caractérisée en ce que la borne d'alimentation (72) se compose d'un boîtier (74) conçu en forme de U et muni d'une surface frontale traversée par une vis (88), de surfaces de branche (76) dotées d'une ouverture (78) pour un conducteur de jonction et de griffes de serrage (80) conçues comme un prolongement, ainsi que d'un levier coudé à même de pivoter sur un axe (82) et pourvu d'une plaquette d'appui (84) et d'une griffe de serrage (86), de sorte qu'en tournant fermement la vis (88), le conducteur de jonction agit sur la plaquette d'appui (84) et les griffes de serrage (80, 86) enserrent fermement la barre collectrice.

10. Distribution basse tension selon l'une quelconque des revendications 1 à 9, caractérisée en ce que les appareils de montage (10) sont équipés d'une borne d'entrée (24) qui est en prise par contact avec un conducteur flexible (22) aboutissant à la pièce de contact à enficher (20) et à laquelle un autre conducteur (23) emmenant ou amenant au moins en partie le courant électrique peut être raccordé – de préférence au moyen d'une pièce de jonction (98), d'une cage (96) et d'une vis (94).

Fig.1

Fig. 10

Fig.2

Fig.3

Fig.4

EP 0 229 590 B1

Fig. 6

PE

64

66

58

N

60 62 68

55

S

H

58

N

56

54

L3

L2

L1

59

Fig. 5

70   72          88  74

76

78

90   84 86   80

Fig. 8

Fig.7

Fig.9